# EUROPÄISCHE PATENTANMELDUNG

(11) **EP 4 671 576 A1**
(43) Veröffentlichungstag der Anmeldung: **31.12.2025**
(21) Anmeldenummer: 25184743.0
(22) Anmeldetag: 24.06.2025
(51) Int. Cl.: F16K 7/12

(54) **VENTILMEMBRAN MIT FEDERELEMENT, MEMBRANVENTIL**

(30) Priorität: 26.06.2024 DE 102024118040
(71) Anmelder: GEMÜ Gebr. Müller Apparatebau GmbH & Co. Kommanditgesellschaft, 74653 Ingelfingen (DE)
(72) Erfinder: Klemt, Michael, 74629 Pfedelbach (DE); Meinikheim, Steffen, 74653 Ingelfingen (DE)
(74) Vertreter: DREISS Patentanwälte PartG mbB

(57) **Zusammenfassung**

Die Erfindung betrifft ein Ventilmembran (12) für ein Membranventil (10), das Ventilmembran (12) umfassend: eine Membranlage (14, 16) mit einem Verspannabschnitt (18) und einem vom Verspannabschnitt (18) umgebenen Funktionsabschnitt (20), wobei der Funktionsabschnitt (20) entlang einer Stellachse (24) verlagerbar ist; und wenigstens ein am oder im Verspannabschnitt (18) angeordnetes, zur Membranlage (14, 16) separat ausgebildetes elastisches Kraftübertragungselement (32) zum Verspannen der Ventilmembran (12) an einem Ventilkörper (28) des Membranventils (10).

## Beschreibung

Die Erfindung betrifft eine Ventilmembran und ein Membranventil.

Aus der US10047863B1 ist eine Membran mit einer eingebetteten Flachspiralfeder bekannt, wobei die Feder sich über die gesamte Ebene der Membran erstreckt.

Der Erfindung liegt die Aufgabe zugrunde, eine Ventilmembran für ein Membranventil bereitzustellen, welches ein Festsetzen der Ventilmembran im Membranventil sicherstellt.

Die der Erfindung zugrundeliegende Aufgabe wird gelöst durch eine Ventilmembran mit den Merkmalen des Anspruchs 1. Die Erfindung ist gerichtet auf eine Ventilmembran für ein Membranventil, das Ventilmembran umfassend: eine nassseitige Membranlage mit einem Verspannabschnitt und einem vom Verspannabschnitt umgebenen Funktionsabschnitt, wobei der Funktionsabschnitt entlang einer Stellachse verlagerbar ist; und wenigstens ein am oder im Verspannabschnitt angeordnetes, zur Membranlage separat ausgebildetes elastisches Kraftübertragungselement zum Verspannen der Ventilmembran an einem Ventilkörper des Membranventils.

Durch das Vorsehen eines Kraftübertragungselements und die separate Ausbildung zum Verspannabschnitt kann eine besonders gezielte und geeignete Verspannung der Ventilmembran an einem Ventilkörper des Membranventils erzielt werden. Die Eigenschaften des Kraftübertragungselements, des Verspannabschnitts und des Funktionsabschnitts können so spezifisch auf die Anforderungen im Membranventil eingestellt werden.

Eine Federrate des Kraftübertragungselements ist vorzugsweise größer als eine Federrate der Membranlage. Ein E-Modul des Kraftübertragungselements ist vorzugsweise größer als ein E-Modul der Membranlage.

Das Verhältnis zwischen der Federrate des elastischen Kraftübertragungselements und der Membranlage liegt vorzugsweise in einem Bereich zwischen 100.000:1 und 1,1:1, insbesondere in einem Bereich zwischen 10.000:1 und 1,5:1, bevorzugt in einem Bereich zwischen 1.000:1 und 2:1. Das Verhältnis zwischen dem E-Modul des elastischen Kraftübertragungselements und der Membranlage liegt vorzugsweise in einem Bereich zwischen 500:1 und 1,1:1, insbesondere in einem Bereich zwischen 200:1 und 1,5:1, bevorzugt in einem Bereich zwischen 50:1 und 2:1.

Es ist vorteilhaft, wenn das wenigstens eine Kraftübertragungselement eine Vorspannung auf die Ventilmembran parallel zur Stellachse aufbringt bzw. die Ventilmembran parallel zur Stellachse mit einer Federkraft beaufschlagt. Demnach wird die Ventilmembran, insbesondere der Verspannabschnitt, gegen einen Ventilkörper des Membranventil festgesetzt.

Es ist ferner vorteilhaft, wenn die Federaufnahme und das wenigstens eine Kraftübertragungselement, insbesondere zumindest abschnittsweise, komplementär zueinander ausgebildet sind.

Ein vorteilhafter Aspekt der Erfindung sieht vor, dass das wenigstens eine Kraftübertragungselement als Wellenfeder, Ringfeder oder Elastomerelement ausgebildet ist. Demnach kann ein besonders einfaches Kraftübertragungselement bereitgestellt werden.

Ein vorteilhafter Aspekt der Erfindung sieht vor, dass das wenigstens eine Kraftübertragungselement ringförmig ausgebildet ist und/oder entlang eines um die Stellachse angeordneten gedachten ersten Kreises angeordnet ist. Demnach wird eine homogene Verspannung des Verspannabschnitts entlang des Umfangs sichergestellt. Vorzugsweise erstreckt sich eine Haupterstreckungsrichtung der Kraftübertragungselemente senkrecht zur Stellachse.

Ein vorteilhafter Aspekt der Erfindung sieht vor, dass die Membranlage im Verspannabschnitt eine Federaufnahme aufweist. Demnach wird eine wiederholgenaue Positionierung des Kraftübertragungselements sichergestellt.

Ein vorteilhafter Aspekt der Erfindung sieht vor, dass die Federaufnahme ringförmig ausgebildet ist und/oder entlang eines um die Stellachse angeordneten gedachten zweiten Kreises angeordnet ist. Entsprechend ist auch hier eine homogene Verspannung entlang des Umfangs sichergestellt. Vorzugsweise sind der erste und zweite Kreis identisch. Der erste Kreis und/oder der zweite Kreis ist vorzugsweise senkrecht zur Stellachse angeordnet.

Ein vorteilhafter Aspekt der Erfindung sieht vor, dass die Federaufnahme parallel zur Stellachse zugänglich ist. Demnach ist eine besonders einfach Zugänglichkeit und Montage sichergestellt. Ferner ist das Kraftübertragungselement dadurch austauschbar.

Ein vorteilhafter Aspekt der Erfindung sieht vor, dass die Federaufnahme lotrecht zur Stellachse, insbesondere in Bezug zur Stellachse von radial außen, zugänglich ist. Demnach ist eine besonders einfach Zugänglichkeit und Montage sichergestellt. Ferner ist das Kraftübertragungselement dadurch austauschbar. Die Federaufnahme könnte zudem parallel und senkrecht zur Stellachse zugänglich sein.

Es ist vorteilhaft, wenn das Kraftübertragungselement zur Stellachse hin vorgespannt ist. Das Kraftübertragungselement weist einen Innendurchmesser auf, der kleiner ist als ein Außendurchmesser der Federaufnahme. Demnach ist das Kraftübertragungselement positionssicher, insbesondere ohne weitere Befestigungsmittel, am Verspannabschnitt festgesetzt.

Die Federaufnahme kann insbesondere L-förmig, topfförmig oder U-förmig ausgebildet sein. Das Kraftübertragungselement und die Federaufnahme sind zumindest abschnittweise zueinander korrespondierend ausgebildet.

Ein vorteilhafter Aspekt der Erfindung sieht vor, dass sich das wenigstens eine Kraftübertragungselement gegen eine Trockenseite der Membranlage abstützt.

Ein vorteilhafter Aspekt der Erfindung sieht vor, dass die Ventilmembran, insbesondere im Verspannabschnitt, eine trockenseitige Membranlage aufweist, wobei sich das wenigstens eine Kraftübertragungselement gegen eine der Trockenseite der nassseitigen Membranlage zugewandte Anlageseite der trockenseitigen Membranlage abstützt. Das Kraftübertragungselement ist vorzugsweise zwischen der nassseitigen Membranlage und der trockenseitigen Membranlage angeordnet.

Ein vorteilhafter Aspekt der Erfindung sieht vor, dass mehrere parallel zur Stellachse angeordnete Kraftübertragungselemente vorgesehen sind. Vorzugsweise erstreckt sich eine Haupterstreckungsrichtung der Kraftübertragungselemente parallel zur Stellachse.

Ein vorteilhafter Aspekt der Erfindung sieht vor, dass das wenigstens eine Kraftübertragungselement aus Federstahl, Chrom-Vanadium-Stahl, Chrom-Silizium-Stahl, Nickel-Legierungen, Polyetheretherketon, Nylon oder Polyurethan hergestellt ist. Demnach ist das Kraftübertragungselement gezielt auf dessen Anforderungen, insbesondere geringer Druckverformungsrest und/oder hohe Langlebigkeit, im Bereich des Verspannabschnitts ausgebildet.

Ein vorteilhafter Aspekt der Erfindung sieht vor, dass ein ein Elastizitätsmodul des wenigstens einen Kraftübertragungselements lotrecht zu einer ventilkörperseitigen Verspannfläche des Verspannabschnitts der Membranlage und/oder parallel zur Stellachse mindestens doppelt so groß, insbesondere mindestens fünfmal so groß, insbesondere mindestens zehnmal so groß, insbesondere mindestens zwanzigmal so groß ist, wie ein Elastizitätsmodul des Hauptmaterials des wenigstens einen Verspannabschnitts der Membranlage. Demnach ist eine besonderes Verspannung sichergestellt.

Die der Erfindung zugrundeliegende Aufgabe wird ebenfalls gelöst durch ein Membranventil mit den Merkmalen des Anspruchs 15. Die Erfindung ist gerichtet auf ein Membranventil mit einem Ventilkörper, mit einem Antriebskörper und mit einer Ventilmembran nach einem der vorherigen Ansprüche, wobei das wenigstens eine Kraftübertragungselement der Ventilmembran zwischen dem Ventilkörper und dem Antriebskörper zum Verspannen der Ventilmembran zum Ventilkörper hin angeordnet ist.

Weitere Vorteile, Merkmale und Einzelheiten ergeben sich aus der nachfolgenden Beschreibung, in der unter Bezugnahme auf die Zeichnung verschiedene Ausführungsbeispiele der Erfindung dargestellt sind. Dabei können die in den Ansprüchen und der Beschreibung genannten Merkmale jeweils einzeln für sich oder in beliebiger Kombination erfindungswesentlich sein.

Es zeigen:
- Fig. 1: eine Schnittansicht einer Membranventil;
- Fig. 2: eine Oberansicht einer Ventilmembran zum Einsatz in der Membranventil gemäß Fig. 1;
- Fig. 3: eine Oberansicht einer weiteren Ventilmembran zum Einsatz in der Membranventil gemäß Fig. 2; und
- Fig. 4 A-E: Schnittansichten von Ausführungsformen von Federaufnahmen und Kraftübertragungselementen.

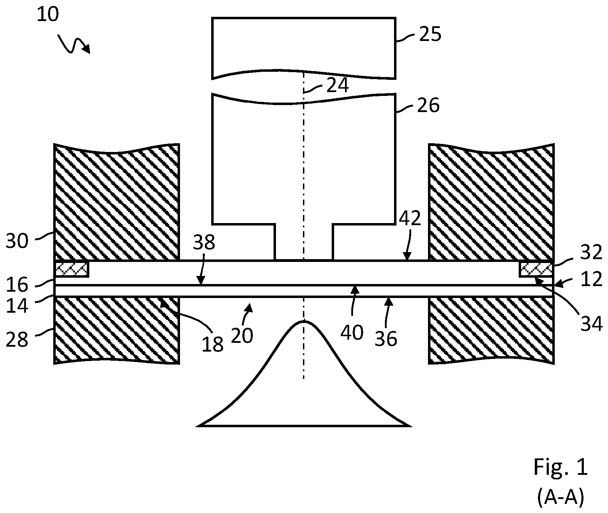

Das Membranventil 10 weist gemäß Fig. 1 eine Ventilmembran 12 mit einer nassseitigen Membranlage 14 und einer trockenseitigen Membranlage 16 auf. Die Ventilmembran 12 umfasst einen Verspannabschnitt 18 und einen vom Verspannabschnitt 18 umgebenen Funktionsabschnitt 20. Der Funktionsabschnitt 20 ist zum Öffnen und Schließen einer Durchgangsleitung 22 des Membranventils 10 entlang einer Stellachse 24 zwischen einer der Durchgangsleitung 22 abgewandten Öffnungsstellung und einer der Durchgangsleitung 22 zugewandten Schließstellung mittels eines Antriebs 25 und der Antriebsstange 26 verlagerbar.

Die Ventilmembran 12 ist zwischen einem Ventilkörper 28 des Membranventils 10 und einem Antriebsgehäuse 30 oder zwischen Zwischengehäuse verspannt und festgesetzt. Das Festsetzen der Ventilmembran 12 im Bereich des Verspannabschnitts 18 dient zur Abdichtung der Durchgangsleitung 22 hin zum Antriebsgehäuse 30. Aufgrund von Setzerscheinungen des Membranmaterials und der damit verminderten Verspannung des Ventilmembran 12 ist zusätzlich wenigstens ein Kraftübertragungselement 32 in einer Federaufnahme 34 der Ventilmembran 12 angeordnet.

Damit eine Abdichtung im Bereich des Verspannabschnitts 18 sichergestellt ist, kann eine erste Nassseite 36 der mit einer Federkraft gegen den Ventilkörper 28 beaufschlagt werden. Dazu kann das wenigstens eine Kraftübertragungselement 32 und die Federaufnahme 34 an einer ersten Trockenseite 38 der nassseitigen Membranlage 14 und/oder zwischen der nassseitigen Membranlage 14 und der trockenseitigen Membranlage 16 und/oder an einer zweiten Nassseite 40 der trockenseitigen Membranlage 16 und/oder an einer zweiten Trockenseite 42 der trockenseitigen Membranlage 16 angeordnet sein. Es ist alternativ denkbar, dass die nassseitige Membranlage 14 und/oder die trockenseitige Membranlage 16 zumindest im Bereich des wenigstens einen Kraftübertragungselements 32 mehrlagig ausgebildet sind, wobei zwischen den mehreren Lage der nassseitigen Membranlage 14 und/oder trockenseitigen Membranlage 16 das wenigstens eine Kraftübertragungselement 32 angeordnet ist.

Gemäß Fig. 1 weist die trockenseitige Membranlage 16 ein Kraftübertragungselement 32 auf. Dazu umfasst die trockenseitige Membranlage 16 eine Federaufnahme 34, welche parallel zur Stellachse 24 und in Bezug zur Stellachse 24 von radial außen zugänglich ist. Das Kraftübertragungselement 32 stützt sich einerseits am Antriebsgehäuse 30 ab und andererseits an der trockenseitige Membranlage 16, sodass die nassseitige Membranlage 14 gegen den Ventilkörper 28 gedrängt wird.

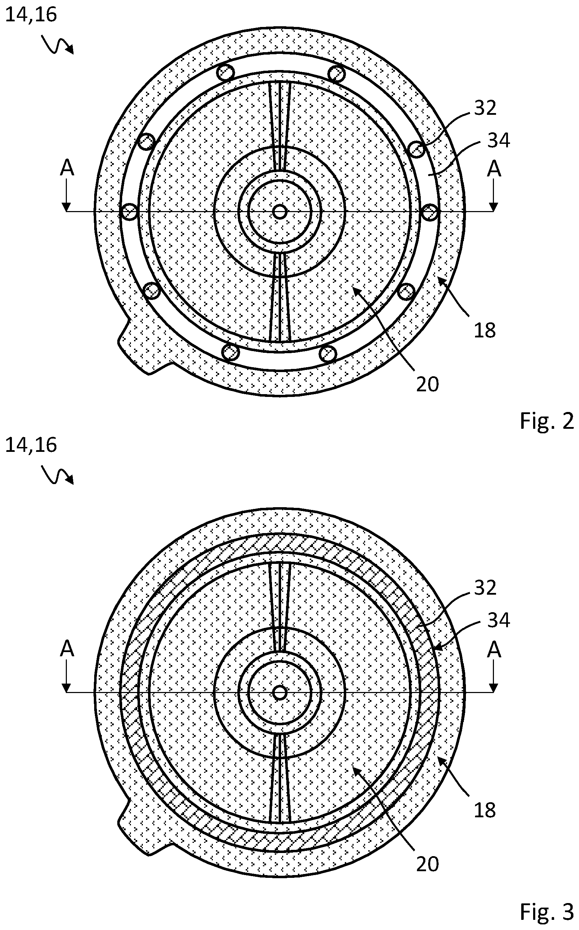

Gemäß Fig. 2 sind zehn Kraftübertragungselemente 32 entlang eines gedachten Kreises um die Stellachse 24 an oder in der Ventilmembran 12, insbesondere der nassseitigen Membranlage 14 und/oder der trockenseitigen Membranlage 16, angeordnet. Die Haupterstreckungsrichtung der Kraftübertragungselemente 32 verläuft vorzugsweise parallel zur Stellachse 24. Demnach üben die Kraftübertragungselemente 32 eine Federkraft parallel zu ihren Haupterstreckungsrichtungen aus.

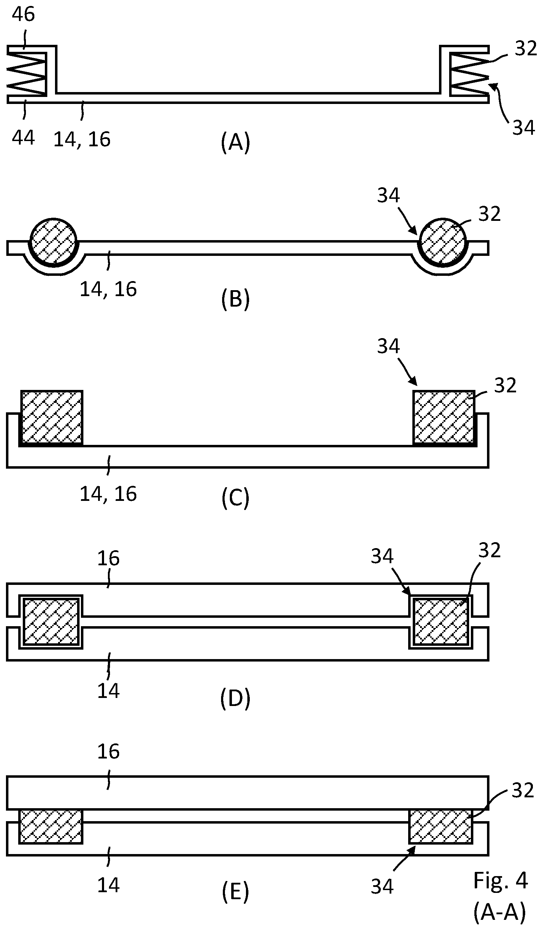

Zur Aufnahme der Kraftübertragungselemente 32 weist die Ventilmembran 12 eine ringförmige Federaufnahme 34 auf, wobei die ringförmige Federaufnahme 34 sich ebenfalls entlang des gedachten Kreise erstreckt. Die Federaufnahme 34 in Fig. 2 kann vorzugsweise topfförmig mit einem Aufnahmenboden, einer Aufnahmeninnenseite und einer Aufnahmenaussenseite ausgebildet sein und begrenzt die Kraftübertragungselemente 32 nach unten, radial außen und radial innen. Die Federaufnahme 34 ist vorzugsweise parallel zur Stellachse 24 von der ersten Trockenseite 38 oder zweiten Trockenseite 42 zugänglich. Eine entsprechende Ausbildung der Federaufnahme 34 ist in Fig. 4E in der ersten Trockenseite 38 der nassseitigen Membranlage 14 gezeigt. Für jedes Kraftübertragungselement 32 kann vorzugsweise auch eine eigene Federaufnahme 34 vorgesehen sein.

Gemäß Fig. 3 ist ein zusammenhängendes Kraftübertragungselement 32 vorgesehen, welches sich in dessen Haupterstreckungsrichtung entlang des gedachten Kreises erstreckt. Demnach üben die Kraftübertragungselemente 32 eine Federkraft senkrecht zu ihren Haupterstreckungsrichtungen aus. Die Federaufnahme 34 kann wie in Fig. 2 ausgebildet sein.

In den Fig. 4A-E sind unterschiedliche Ausführungsformen gezeigt, wie die Kraftübertragungselemente 32 und die Federaufnahmen 34 der Ventilmembranen 12 ausgebildet sein können. Die dargestellten Membranlagen können sowohl die nassseitige Membranlage 14 als auch die trockenseitige Membranlage 16 darstellen. Nachfolgend wird zur Vereinfachung der Beschreibung der Fig. 4A-C nur auf die nassseitige Membranlage 14 Bezug genommen, auch wenn diese auch auf die trockenseitige Membranlage übertragbar ist.

Gemäß Fig. 4A ist nassseitige Membranlage 14 zumindest im Bereich des Verspannabschnitts 18 mehrlagig ausgebildet. Demnach umfasst die nassseitige Membranlage 14 im Bereich des Verspannabschnitts 18 eine, insbesondere der Durchgangsleitung 22 zugewandte, primäre Lage 44 und eine, insbesondere der Durchgangsleitung 22 abgewandte, sekundäre Lage 46 auf. Die nassseitige Membranlage 14 weist eine Federaufnahme 34 auf, welche in Bezug zur Stellachse 24 von radial außen zugänglich ist. Die Federaufnahme 34 ist vorzugsweise an der in Bezug zur Stellachse 24 radial äußeren Außenseite der Ventilmembran 12. Die Federaufnahme 34 ist vorzugsweise topfförmig ausgebildet, wobei diese im Gegensatz zu den Fig. 2 und 3 um 90° nach außen gedreht ist. Die primäre Lage 44 und die sekundäre Lage 46 bilden dabei die Aufnahmeninnen- und -außenseite der Federaufnahme 34. Die Kraftübertragungselemente 32 sind hier beispielhaft als parallel zur Stellachse 24 erstreckende Druckfedern ausgebildet. Alternativ ist es auch denkbar, dass mehrere Elastomerelemente oder eine Wellenfeder oder eine Ringfeder eingesetzt wird. Demnach zeigt sich, dass die Federaufnahmen 34 zur Aufnahme unterschiedlicher Kraftübertragungselemente 32 ausgebildet sind. Durch die Zugänglichkeit können die Kraftübertragungselemente 32 zudem einfach ausgetauscht werden.

Gemäß Fig. 4B weist die nassseitige Membranlage 14 eine im Querschnitt halbkreisförmige Ausnehmung als Federaufnahme 34 auf. Alternativ kann die Ausnehmung auch ellipsenförmig ausgebildet sein. Die Federaufnahme 34 ist vorzugsweise ebenfalls im Verspannabschnitt 18 angeordnet. Die Federaufnahme 34 ist vorzugsweise entlang des Umfangs der Ventilmembran 12 durchgängig ausgebildet und erstreckt sich vorzugsweise entlang des gedachten Kreise. Es ist vorzugsweise ein einziges Kraftübertragungselement 32 vorgesehen, wobei sich dieses entsprechend zur Federaufnahme 34 ebenfalls entlang des gedachten Kreises erstreckt und entlang des Umfangs der Ventilmembran 12 durchgängig ausgebildet ist. Auch hier kann die Federaufnahme 34 im Bereich der Außenseite, der Innenseite oder im Mittelbereich des Verspannabschnitts 18 angeordnet sein. Da die Federaufnahme 34 parallel zur Stelleachse 24 zugänglich ist, insbesondere von der ersten Nassseite 36 der Membranlage, ist das Kraftübertragungselement 32 durch eine Fügebewegung parallel zur Stellachse 24 an der nassseitigen Membranlage 14 montierbar.

Gemäß Fig. 4C weist die nassseitige Membranlage 14 eine L-förmige Federaufnahme 34 auf. Die Federaufnahme 34 ist vorzugsweise parallel zur Stellachse 24 und in Bezug zur Stellachse 24 von radial innen zugänglich. Im Vergleich zu Fig. 1 ist die L-förmige Federaufnahme 34 hier gespiegelt. Als Kraftübertragungselement 32 kann ein ringförmiges Elastomerelement zum Einsatz kommen. Das Kraftübertragungselement 32 und die Federaufnahme 34 sind vorzugsweise derart ausgebildet, dass die Außenseite des Kraftübertragungselement 32 an der Aufnahmeninnenseite der Federaufnahme 34 anliegt. Diese können ferner in der deren Dimensionen ausgebildet sein, dass das Kraftübertragungselement 32 die Ventilmembran 12 nach radial außen vorspannt.

Gemäß Fig. 4D weisen die nassseitige Membranlage 14 und die trockenseitige Membranlage 16 jeweils zwei einander gegenüberliegende, insbesondere topfförmige, Federaufnahmen 34 auf. Die Federaufnahmen 34 sind vorzugsweise zum einen auf der ersten Trockenseite 38 der nassseitigen Membranlage 14 und zum anderen der zweiten Nassseite 40 der trockenseitigen Membranlage 16. Demnach greift im montierten Zustand das Kraftübertragungselement 32 in beide Membranlagen ein. Auch hier kann beispielsweise ein, insbesondere einziges, ringförmiges Elastomerelement zum Einsatz kommen. Alternativ sind ebenfalls Wellen- oder Ringfedern denkbar.

Die Ventilmembran 12 gemäß Fig. 4E unterscheidet sich von der in Fig. 4D dahingehend, dass nur eine Federaufnahme 34 vorgesehen ist. Diese kann auf der ersten Trockenseite 38 der nassseitigen Membranlage 14, wie in Fig. 4E dargestellt, oder auf der zweiten Nassseite 40 der trockenseitigen Membranlage 16 oder auf der zweiten Trockenseite 42 der trockenseitigen Membranlage 16 angeordnet sein. Gemäß Fig. 4E kommt das Kraftübertragungselement 32 im montierten Zustand mit der ebenen zweiten Nassseite 40 der trockenseitigen Membranlage 16 zur Anlage. Auch hier kann beispielsweise ein, insbesondere einziges, ringförmiges Elastomerelement zum Einsatz kommen. Alternativ sind ebenfalls Wellen- oder Ringfedern denkbar.

Es ist zu beachten, dass die Größenverhältnisse der Membranlagen 14, 16, der Kraftübertragungselemente 32, der Federaufnahmen 34, der Spaltmaße in den Figuren zur vereinfachten Veranschaulichung verzerrt dargestellt sein können.

### Bezugszeichenliste

- 10: Membranventil
- 12: Ventilmembran
- 14: nassseitige Membranlage
- 16: trockenseitige Membranlage
- 18: Verspannabschnitt
- 20: Funktionsabschnitt
- 22: Durchgangsleitung
- 24: Stellachse
- 25: Antrieb
- 26: Antriebsstange
- 28: Ventilkörper
- 30: Antriebsgehäuse
- 32: Kraftübertragungselement
- 34: Federaufnahme
- 36: erste Nassseite der nassseitigen Membranlage
- 38: erste Trockenseite der nassseitigen Membranlage
- 40: zweite Nassseite der trockenseitigen Membranlage
- 42: zweite Trockenseite der trockenseitigen Membranlage
- 44: primäre Lage
- 46: sekundäre Lage

## Patentansprüche

1. Ventilmembran (12) für ein Membranventil (10), das Ventilmembran (12) umfassend:
- eine Membranlage (14, 16) mit einem Verspannabschnitt (18) und einem vom Verspannabschnitt (18) umgebenen Funktionsabschnitt (20), wobei der Funktionsabschnitt (20) entlang einer Stellachse (24) verlagerbar ist; und
- wenigstens ein am oder im Verspannabschnitt (18) angeordnetes, zur Membranlage (14, 16) separat ausgebildetes elastisches Kraftübertragungselement (32) zum Verspannen der Ventilmembran (12) an einem Ventilkörper (28) des Membranventils (10).

2. Ventilmembran (12) nach Anspruch 1, wobei eine Federrate des Kraftübertragungselements (32) größer als eine Federrate der Membranlage (14, 16) ist, und/oder ein E-Modul des Kraftübertragungselements (32) größer als ein E-Modul der Membranlage (14, 16) ist.

3. Ventilmembran (12) nach Anspruch 1 oder 2, wobei ein Verhältnis zwischen einer Federrate des Kraftübertragungselements (32) und der Membranlage (14, 16) in einem Bereich zwischen 100.000:1 und 1,1:1, insbesondere in einem Bereich zwischen 10.000:1 und 1,5:1, bevorzugt in einem Bereich zwischen 1.000:1 und 2:1, liegt, und/oder wobei ein Verhältnis zwischen einem E-Modul des Kraftübertragungselement (32) und der Membranlage (14, 16) in einem Bereich zwischen 500:1 und 1,1:1, insbesondere in einem Bereich zwischen 200:1 und 1,5:1, bevorzugt in einem Bereich zwischen 50:1 und 2:1, liegt.

4. Ventilmembran (12) nach Anspruch 1, 2 oder 3, wobei das Kraftübertragungselement (32) an einer nassseitigen Membranlage (14) und/oder trockenseitigen Membranlage (16) angeordnet ist.

5. Ventilmembran (12) nach einem der vorherigen Ansprüche, wobei das wenigstens eine Kraftübertragungselement (32) als Wellenfeder, Ringfeder, Druckfeder oder Elastomerelement ausgebildet ist.

6. Ventilmembran (12) nach einem der vorherigen Ansprüche, wobei das wenigstens eine Kraftübertragungselement (32) ringförmig ausgebildet ist und/oder entlang eines um die Stellachse (24) angeordneten gedachten ersten Kreises angeordnet ist.

7. Ventilmembran (12) nach einem der vorherigen Ansprüche, wobei die Membranlage (14, 16) im Verspannabschnitt (18) eine Federaufnahme (34) aufweist.

8. Ventilmembran (12) nach dem vorherigen Anspruch, wobei die Federaufnahme (34) ringförmig ausgebildet ist und/oder entlang eines um die Stellachse (24) angeordneten gedachten zweiten Kreises angeordnet ist.

9. Ventilmembran (12) nach dem vorherigen Anspruch, wobei die Federaufnahme (34) parallel zur Stellachse (24) zugänglich ist.

10. Ventilmembran (12) nach Anspruch 9, wobei die Federaufnahme (34) lotrecht zur Stellachse (24), insbesondere in Bezug zur Stellachse (24) von radial außen, zugänglich ist.

11. Ventilmembran (12) nach einem der Ansprüche 7 bis 10, wobei die Federaufnahme (34) L-förmig, topfförmig oder U-förmig ausgebildet ist.

12. Ventilmembran (12) nach einem der vorherigen Ansprüche, wobei sich das wenigstens eine Kraftübertragungselement (32) gegen eine Trockenseite (38, 42) der Membranlage (14, 16) abstützt.

13. Ventilmembran (12) nach einem der vorherigen Ansprüche, wobei die Ventilmembran (12), insbesondere im Verspannabschnitt (18), eine trockenseitige Membranlage (16) aufweist, wobei sich das wenigstens eine Kraftübertragungselement (32) gegen eine erste Trockenseite (38) der nassseitigen Membranlage (14) zugewandte zweite Nassseite (40) der trockenseitigen Membranlage (16) abstützt.

14. Ventilmembran (12) nach einem der vorherigen Ansprüche, wobei mehrere parallel zur Stellachse (24) angeordnete Kraftübertragungselemente (32) vorgesehen sind.

15. Ventilmembran (12) nach einem der vorherigen Ansprüche, wobei das wenigstens eine Kraftübertragungselement (32) aus Federstahl, Chrom-Vanadium-Stahl, Chrom-Silizium-Stahl, Nickel-Legierungen, Polyetheretherketon, Nylon oder Polyurethan hergestellt ist.

16. Ventilmembran (12) nach einem der vorigen Ansprüche, wobei ein ein Elastizitätsmodul des wenigstens einen Kraftübertragungselements (32) lotrecht zu einer ventilkörperseitigen Verspannfläche des Verspannabschnitts (18) der Membranlage (14, 16) mindestens doppelt so groß, insbesondere mindestens fünfmal so groß, insbesondere mindestens zehnmal so groß, insbesondere mindestens zwanzigmal so groß ist, wie ein Elastizitätsmodul des Hauptmaterials des wenigstens einen Verspannabschnitts (18) der Membranlage (14, 16).

17. Membranventil (10) mit einem Ventilkörper (28), mit einem Antriebsgehäuse (30) und mit einer Ventilmembran (12) nach einem der vorherigen Ansprüche, wobei das wenigstens eine Kraftübertragungselement (32) der Ventilmembran (12) zwischen dem Ventilkörper (28) und dem Antriebsgehäuse (30) zum Verspannen der Ventilmembran (12) zum Ventilkörper (28) hin angeordnet ist.
